# EUROPEAN PATENT APPLICATION

(11) **EP 3 534 314 A1**
(43) Date of publication of application: **04.09.2019**
(21) Application number: 18205039.3
(22) Date of filing: 07.11.2018
(51) Int. Cl.: G06Q 20/20, G06Q 20/32, G07F 15/00

(54) **METHOD AND SYSTEM FOR PAYMENT BY USING AN INSTRUMENT CLUSTER DEVICE**

(30) Priority: 02.03.2018 TW 107107002
(71) Applicant: Kwang Yang Motor Co., Ltd., Kaohsiung City 80794 (TW)
(72) Inventor: WU, Kuo-Chen, 11501 Taipei City (TW); LIN, Chen-Sheng, 80794 Kaohsiung (TW); TSAI, Yi-Yang, 80794 Kaohsiung (TW)
(74) Representative: Yang, Shu

(57) **Abstract**

A method for payment to fulfill a transaction includes steps of: by a payment certification reader of a Point of Sale (POS) terminal (9), reading a payment certification from an instrument cluster device (5) of a vehicle (1), and transmitting the payment certification to a POS computer (91) of the POS terminal (9); by the POS computer (91) via the Internet (8), enabling a portable device (6) to transmit payment information to the instrument cluster device (5); by the instrument cluster device (5), displaying the payment information; by the instrument cluster device (5) after the transaction has been confirmed by a user operation on the vehicle (1), enabling the portable device (6) to process the payment; and by the portable device (6), transmitting a confirmation message to the instrument cluster device (5).

## Description

The disclosure relates to a method and a system for payment, and more particularly to a method and a system for payment by using an instrument cluster device of a vehicle to fulfill a transaction.

Conventional approaches for payment in a transaction may be realized by paying in cash, paying with a credit card, or mobile payment such as Apple Pay or Android Pay. For drivers of vehicles, the aforementioned conventional approaches for payment may be inconvenient due to the additional actions of taking out the cash, the credit card or a portable device. In a scenario that a motorcycle rider wearing a raincoat is going to pay for fuel, the conventional approaches for payment may be even more cumbersome.

Therefore, an object of the disclosure is to provide a method and a system for payment by using an instrument cluster device to fulfill a transaction that can alleviate at least one of the drawbacks of the prior art.

According to one aspect of the disclosure, the system for payment is adapted to be used in combination with a vehicle and a Point of Sale (POS) terminal. The POS terminal includes a POS computer and a payment certification reader that is electrically connected to the POS computer. The system includes an instrument cluster device and a portable device. The instrument cluster device is disposed on the vehicle. The instrument cluster device is configured to provide a payment certification that is to be read by the payment certification reader of the POS terminal, so as to enable the payment certification reader of the POS terminal to transmit the payment certification to the POS computer of the POS terminal for further transmission of payment information regarding the transaction by the POS computer of the POS terminal via the Internet. The portable device is communicable with the instrument cluster device, and is associated with the payment certification. The portable device is configured to receive the payment information transmitted by the POS computer of the POS terminal, and to transmit the payment information to the instrument cluster device. The instrument cluster device is further configured to display the payment information, and to, after the transaction has been confirmed by a user operation on the instrument cluster device, enable the portable device to process the payment.

According to another aspect of the disclosure, the method is adapted to be implemented by the instrument cluster device of the vehicle, the portable device and the POS terminal that are previously mentioned. The method is characterized by steps of:
(a) by the payment certification reader of the POS terminal, reading a payment certification that is associated with the portable device from the instrument cluster device of the vehicle, and transmitting the payment certification to the POS computer of the POS terminal;
(b) by the POS computer of the POS terminal via the Internet, enabling the portable device associated with the payment certification to transmit payment information regarding the transaction to the instrument cluster device that communicates with the portable device;
(c) by the instrument cluster device, displaying the payment information;
(d) by the instrument cluster device after the transaction has been confirmed by a user operation on the vehicle, enabling the portable device to process the payment; and
(e) by the portable device, transmitting a confirmation message indicating that the payment has been made to the instrument cluster device.

Other features and advantages of the disclosure will become apparent in the following detailed description of the embodiments with reference to the accompanying drawings, of which:
Figure 1 is a block diagram illustrating a first embodiment of a system for payment by using an instrument cluster device to fulfill a transaction according to the disclosure;
Figure 2 is a schematic diagram illustrating an embodiment of the instrument cluster device used by the first embodiment of the system for payment according to the disclosure;
Figure 3 is a flowchart illustrating a first embodiment of a method for payment by using an instrument cluster device to fulfill a transaction according to the disclosure;
Figure 4 is a schematic diagram illustrating an embodiment of displaying a Quick Response (QR) code by a host display of the instrument cluster device;
Figure 5 is a schematic diagram illustrating an embodiment of displaying payment information by the host display of the instrument cluster device;
Figure 6 is a schematic diagram illustrating an embodiment of displaying a confirmation message by the host display of the instrument cluster device;
Figure 7 is a block diagram illustrating a second embodiment of the system for payment according to the disclosure;
Figure 8 is a flowchart illustrating a second embodiment of the method for payment according to the disclosure;
Figure 9 is a block diagram illustrating a third embodiment of the system for payment according to the disclosure;
Figure 10 is a flowchart illustrating a third embodiment of the method for payment according to the disclosure;
Figure 11 is a schematic diagram illustrating an embodiment of displaying a prompt message by the host display of the instrument cluster device;
Figure 12 is a block diagram illustrating a fourth embodiment of the system for payment according to the disclosure;
Figure 13 is a flowchart illustrating a fourth embodiment of the method for payment according to the disclosure;
Figure 14 is a block diagram illustrating a variant of the first embodiment of the system for payment according to the disclosure; and
Figure 15 is a block diagram illustrating a variant of the third embodiment of the system for payment according to the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

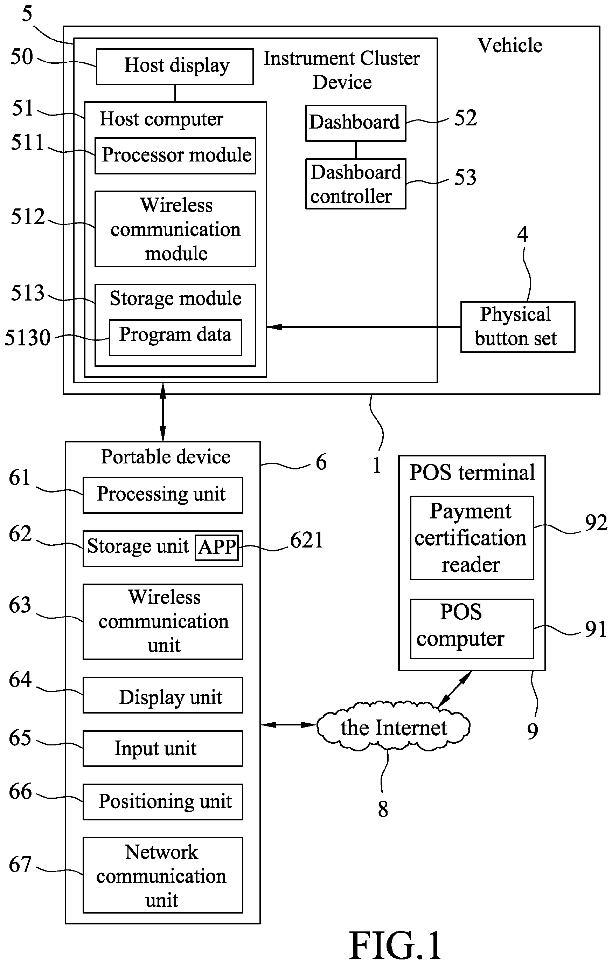

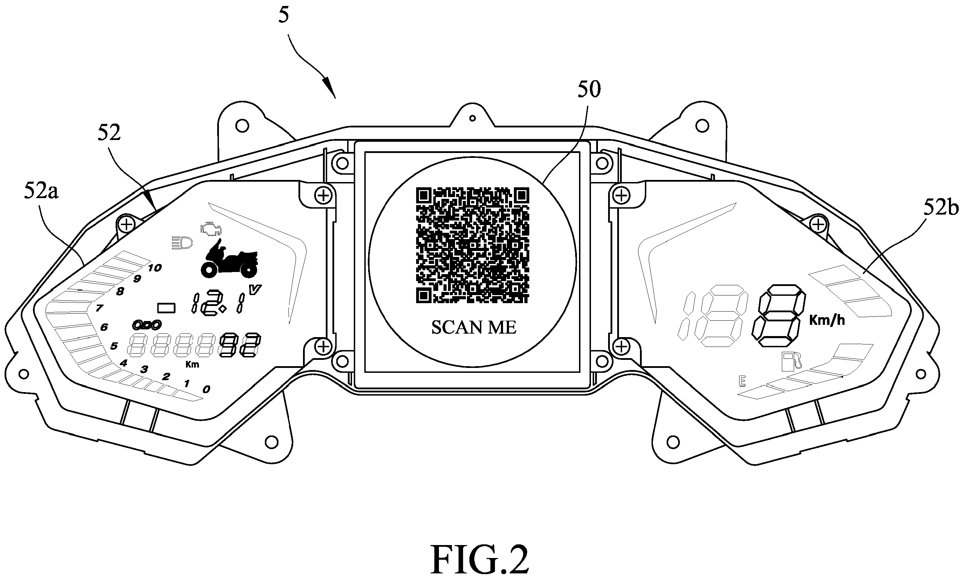

Referring to Figures 1 and 2, a first embodiment of a system for payment by using an instrument cluster device 5 to fulfill a transaction according to the disclosure is illustrated. The system for payment is adapted to be utilized in combination with a vehicle 1 and a Point of Sale (POS) terminal 9. The vehicle 1 includes an energy storage (not shown) (e.g., a fuel tank for storing fuel such as gasoline, or a battery for storing electric energy). The vehicle 1 may be a motorcycle, a car, an all-terrain vehicle (ATV), a utility vehicle (UV), an electric scooter, or the like, but implementation of the vehicle 1 is not limited to the disclosure herein and may vary in other embodiments. In this embodiment, the transaction is associated with purchase of energy resource, such as paying for gasoline (or diesel) pumped into the fuel tank at a filling station or paying for electric energy supplied at a charging station. However, implementation of the transaction is not limited to the disclosure herein and may vary in other embodiments. For example, the transaction may be associated with purchase of any commodity that can be purchased at a store by which the vehicle 1 is able to be stopped, e.g., a purchase of tea at a beverage stall.

The POS terminal 9 includes a POS computer 91 and a payment certification reader 92 that is electrically connected to the POS computer 91.

In the first embodiment, the system includes the instrument cluster device 5, a portable device 6, and a physical button set 4 (or virtual buttons displayed on the instrument cluster device 5) . The physical button set 4 may include one or more buttons, is disposed on the vehicle 1, is electrically connected to the instrument cluster device 5, and is to be operated for confirmation of information associated with a total charge involved in the transaction.

In one embodiment, the portable device 6 and the instrument cluster device 5 are configured to communicate with each other through wired communication. In one embodiment, the portable device 6 and the instrument cluster device 5 are configured to communicate with each other through wireless communication.

The instrument cluster device 5 is disposed on the vehicle 1. The instrument cluster device 5 is configured to provide a payment certification that is to be read by the payment certification reader 92 of the POS terminal 9, so as to enable the payment certification reader 92 of the POS terminal 9 to transmit the payment certification to the POS computer 91 of the POS terminal 9. Subsequently, the POS computer 91 transmits payment information regarding the transaction over the Internet 8. It is worth to note that the payment certification contains information regarding how to reach the portable device 6 over the Internet 8 (e.g., the information may be an IP address of the portable device 6). The POS computer 91 of the POS terminal 9 transmits the payment information to the portable device 6 over the Internet 8 based on the information. The portable device 6 is further configured to, after receiving the payment information regarding the transaction, relay the payment information to the instrument cluster device 5 that is communicating with the portable device 6. Then, the instrument cluster device 5 is configured to display the payment information, and to enable, after the transaction has been confirmed by a user operation on the instrument cluster device 5, the portable device 6 to process the payment.

The instrument cluster device 5 includes a host display 50 that is configured to display a barcode which contains information of the payment certification and which is to be read by the payment certification reader 92 of the POS terminal 9 through image scanning. The host display 50 is further configured to display the payment information.

In this embodiment, the barcode is implemented to be a Quick Response code (QR-code), but implementation of the barcode is not limited to the disclosure herein and may vary in other embodiments. For example, the barcode may be implemented to be a linear barcode or other types of matrix barcode.

The instrument cluster device 5 further includes a host computer 51, a dashboard 52 and a dashboard controller 53. The host computer 51 is electrically connected to the host display 50 and controls display on the host display 50. The dashboard 52 is electrically connected to the dashboard controller 53.

Referring to Figure 2, the dashboard 52 has a left part 52a and a right part 52b that are respectively at two sides of the host display 50. The dashboard 52 is configured to display information of accumulated mileage, indication of a battery voltage, indication of a speed of vehicle, indication of an energy level of energy resource, and so on. Based on a user operation on the physical button set 4 of the vehicle 1, the host display 50 positioned between the left and right parts 52a, 52b of the dashboard 52 is further configured to be operated in one of a remote mode and an offline mode. In the remote mode, the host computer 51 is wirelessly communicable with the portable device 6 so as to enable the host display 50 to display information of electronic payment, the indication of the speed of vehicle, indication of time, information of weather, an illustration of a navigation system, notifications, information of car search, and so on. In the offline mode, the host computer 51 controls the dashboard 52 to display information selected by user operation on the dashboard 52, such as the indication of accumulated mileage, indication of mileage of an individual trip, the indication of the energy level of energy resource, a result of measurement of tire pressure, the indication of the battery voltage, and so on.

As shown in Figure 1, in the first embodiment of the disclosure, the host computer 51 includes a processor module 511, a wireless communication module 512, and a storage module 513 which is configured to store program data 5130, such as an operating system (OS), firmware (FW), and application programs of the host computer 51. The processor module 511 is electrically connected to the host display 50, the wireless communication module 512, the storage module 513 and the physical button set 4. In this embodiment, the processor module 511 may be implemented by a processor, a central processing unit (CPU), a microprocessor or any circuit configurable/programmable in a software manner and/or hardware manner to implement functionalities of this disclosure. In this embodiment, the storage module 513 may be implemented by flash memory, a hard disk drive (HDD) or a solid state disk (SSD), electrically-erasable programmable read-only memory (EEPROM) or any other non-volatile memory devices. In this embodiment, the wireless communication module 512 may be implemented to be a Bluetooth module or a Wi-Fi module, and the host display 50 may be implemented to be a liquid crystal display (LCD) or a light-emitting diode (LED) display. However, implementations of the processor module 511, the wireless communication module 512, the storage module 513 and the host display 50 are not limited to the disclosure herein and may vary in other embodiments .

The portable device 6 includes a processing unit 61, a storage unit 62 which is configured to store an application program (APP) 621, a wireless communication unit 63, a display unit 64, an input unit 65, a positioning unit 66 such as a Global Positioning System (GPS) device, and a network communication unit 67. In this embodiment, the portable device 6 may be implemented to be a smartphone, a wearable device (e.g., a smartwatch), a tablet or a personal digital assistant (PDA), but implementation thereof is not limited to what are disclosed herein and may vary in other embodiments.

By using the same wireless communication technology (e.g., the Bluetooth wireless technology), the wireless communication unit 63 of the portable device 6 can be connected with the wireless communication module 512 of the instrument cluster device 5. The portable device 6 is associated with the payment certification. The portable device 6 is configured to receive the payment information transmitted by the POS computer 91 of the POS terminal 9, and to transmit the payment information to the instrument cluster device 5.

In one embodiment, the display unit 64 and the input unit 65 may be implemented to be integrated as a touchscreen of a smartphone or a tablet so as to allow a user of the portable device 6 to obtain information (e.g., to read content displayed on a user interface of the APP 621) and to input data by operating the touchscreen.

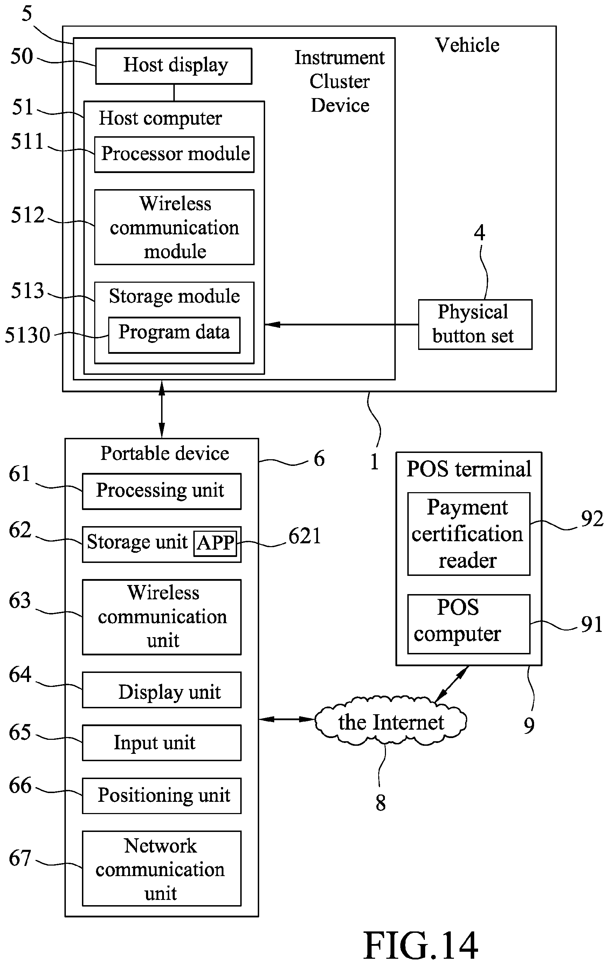

Referring to Figure 14, a variant of the first embodiment of the system for payment is illustrated. In this embodiment, the instrument cluster device 5 includes only the host display 50 and the host computer 51, and does not include the dashboard 52 and the dashboard controller 53 that are shown in Figure 1. All functions of the dashboard 52 and the dashboard controller 53 are realized by the host display 50 and the host computer 51.

Prior to using the first embodiment of the system for payment according to the disclosure, a user has to bind the portable device 6 to an account for payment (e.g., a credit card account or a debit card account) using the APP 621 stored in the portable device 6, so that the user can use the instrument cluster device 5 which is wirelessly connected to the portable device 6 to fulfill a transaction.

Referring to Figures 1 to 6, a first embodiment of a method for payment by using an instrument cluster device 5 to fulfill a transaction is illustrated. The method is adapted to be implemented by the instrument cluster device 5 of the vehicle 1, the portable device 6 and the POS terminal 9 that are described in the first embodiment of the system for payment. In this embodiment, the portable device 6 and the instrument cluster device 5 are wirelessly connected, but in a variant of this embodiment, the portable device 6 and the instrument cluster device 5 may be connected in a wired manner. The method includes steps S213 to S220 described as follows, and the transaction will be exemplified to be associated with payment for filling the vehicle 1 with energy resource (e.g., filling a gas-driven vehicle 1 with gasoline, or charging an electric vehicle).

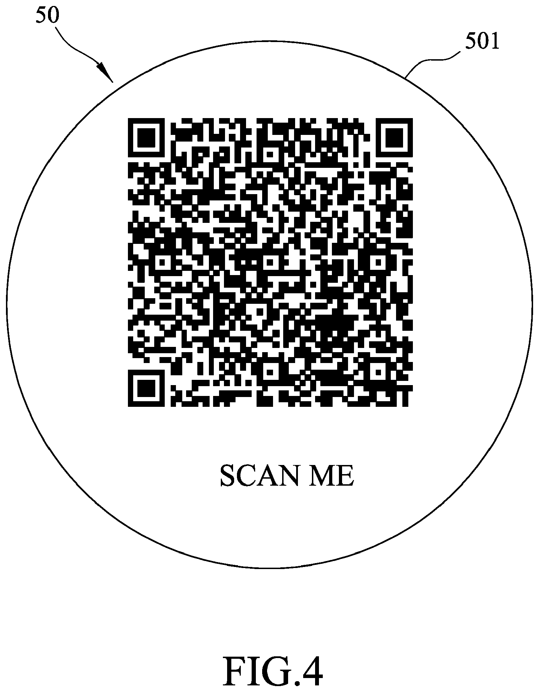

In step S213, after the energy storage of the vehicle 1 is filled with a desired amount of the energy resource (e.g., the energy storage is filled up with the energy resource), the host display 50 of the instrument cluster device 5 displays an image associated with the QR code 501 as shown in Figure 4 according to a user operation performed on the physical button set 4.

In step S214, the payment certification reader 92 of the POS terminal 9 reads the QR code from the host display 50 of the instrument cluster device 5 of the vehicle 1, so as to obtain a payment certification that is associated with the portable device 6, and transmits the payment certification to the POS computer 91 of the POS terminal 9.

In step S215, the POS computer 91 of the POS terminal 9 enables, via the Internet 8, the portable device 6 associated with the payment certification to transmit payment information regarding the transaction to the instrument cluster device 5 that communicates with the portable device 6. In this embodiment, the portable device 6 utilizes the network communication unit 67 to receive the payment information from the POS computer 91 of the POS terminal 9, and then utilizes the wireless communication unit 63 to transmit the payment information to the wireless communication module 512 of the instrument cluster device 5 for further transmission of the payment information to the processor module 511 of the instrument cluster device 5.

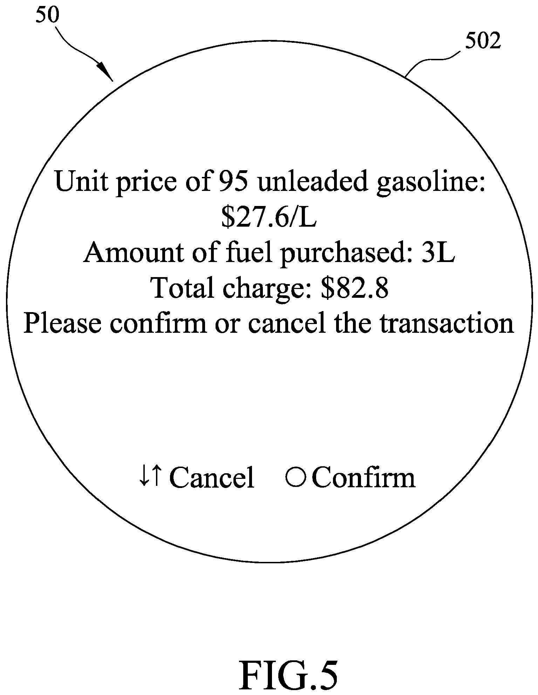

In step S216, the processor module 511 of the instrument cluster device 5 controls the host display 50 to display a message associated with the payment information 502 as shown in Figure 5. In this embodiment, the payment information may include information associated with a type of the energy resource and unit price of the type of energy resource, information associated with an amount of energy resource purchased, and information associated with a total charge to be paid in the transaction. Additionally, the message associated with the payment information 502 further contains options to be selected for confirming the transaction or cancelling the transaction.

In step S217, the physical button set 4 is operated by the user to select the option of confirmation of the total charge involved in the transaction provided by the payment information.

In step S218, the instrument cluster device 5 enables, after the transaction has been confirmed by a user operation performed on the physical button set 4 of the vehicle 1, the portable device 6 to process the payment. Specifically speaking, in this embodiment, the processor module 511 of the instrument cluster device 5 generates, after the transaction has been confirmed by the user operation performed on the physical button set 4, an activation signal that authorizes the payment, and transmits the activation signal to the portable device 6 via the wireless communication module 512, so as to enable the portable device 6 to process the payment using the account for payment bound to the portable device 6. Since details of implementation of processing the payment using the account for payment by the portable device 6 is well known to one skilled in the relevant art, detailed explanation of the same is omitted herein for the sake of brevity.

In step S219, after receiving a confirmation message indicating that the payment has been made (e.g., the confirmation message may come from a bank server), the portable device 6 transmits the confirmation message to the instrument cluster device 5.

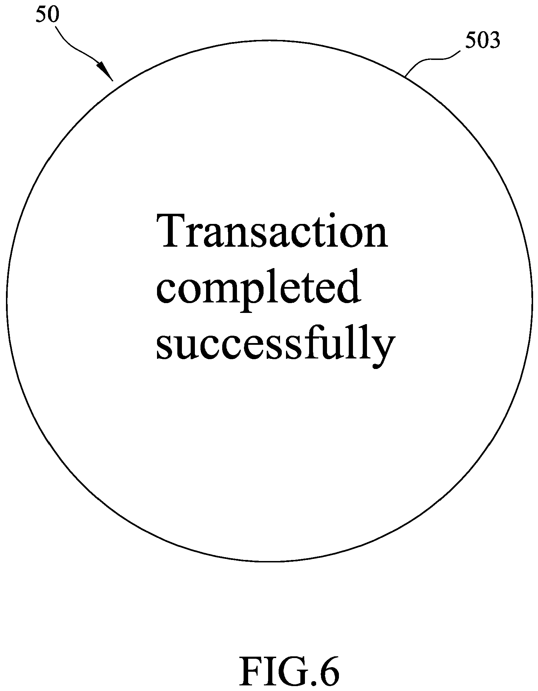

In step S220, the processor module 511 of the instrument cluster device 5 controls the host display 50 to display a notification of a result of the payment 503 according to the confirmation message as shown in Figure 6.

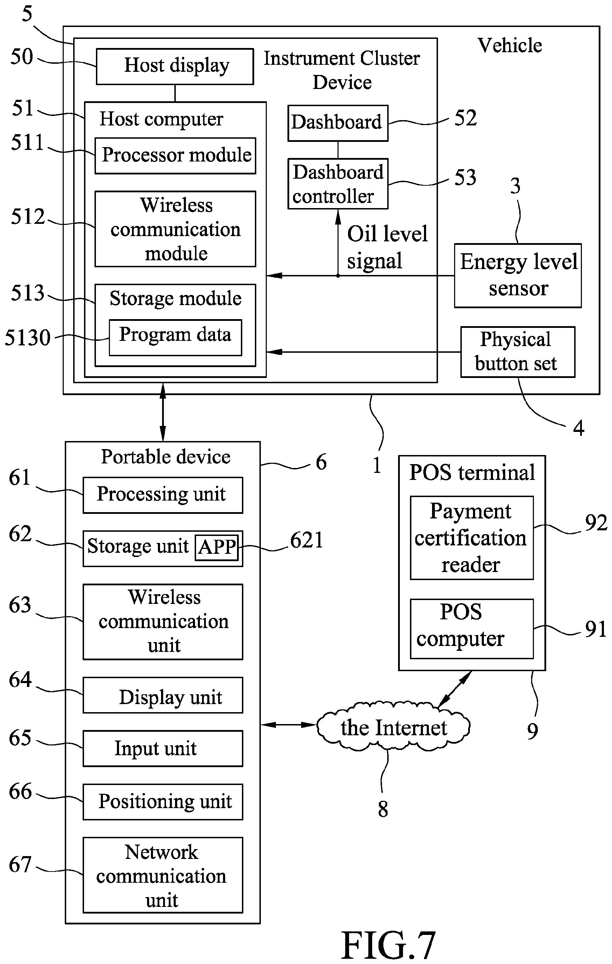

Referring to Figure 7, a second embodiment of the system for payment according to the disclosure is illustrated. The second embodiment of the system for payment is similar to the first embodiment of the system for payment previously described, but is different in aspects described as follows.

The system for payment of the second embodiment further includes an energy level sensor 3. The energy level sensor 3 is electrically connected to the instrument cluster device 5. In this embodiment, the energy level sensor 3 is electrically connected to the host computer 51 and the dashboard controller 53. The energy level sensor 3 is configured to detect an energy level of energy resource in the energy storage (e.g., a level of fuel in a fuel tank, or residual electrical energy in a battery) so as to generate an energy level signal, and to transmit the energy level signal to the host computer 51 and the dashboard controller 53. Subsequently, a result of energy level detection is displayed on the host display 50 and the dashboard 52 based on the energy level signal.

The instrument cluster device 5 is further configured to determine whether the energy level of the energy resource in the energy storage is raised based on the energy level signal, and to display, when it is determined by the instrument cluster device 5 that the energy level of the energy resource in the energy storage is raised, the barcode on the host display 50 of the instrument cluster device 5. That is to say, when it is determined that the energy storage of the vehicle 1 is being filled with energy resource, causing the energy level of energy resource to rise, the instrument cluster device 5 is implemented to automatically display the barcode.

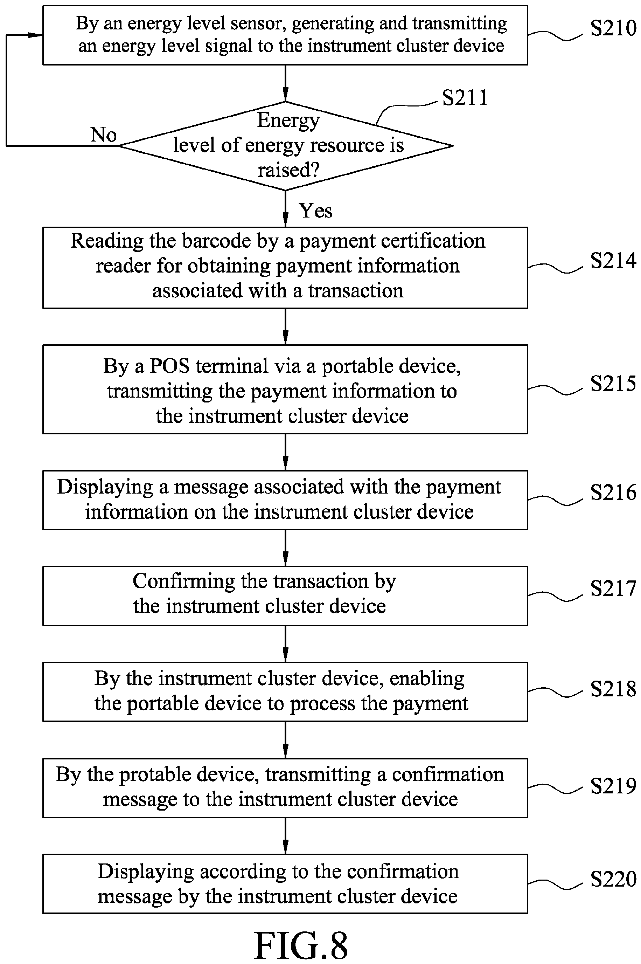

Referring to Figure 8, a second embodiment of the method for payment is illustrated. The method is adapted to be implemented by the instrument cluster device 5 of the vehicle 1, the portable device 6 and the POS terminal 9 that are described in the second embodiment of the system for payment depicted exemplarily in Figure 7.

In step S210, the energy level sensor 3 detects the energy level of energy resource in the energy storage so as to generate the energy level signal, and transmits the energy level signal to the host computer 51 and the dashboard controller 53 of the instrument cluster device 5. Then, the host computer 51 and the dashboard controller 53 of the instrument cluster device 5 respectively control the host display 50 and the dashboard 52 to display a result of energy level detection based on the energy level signal. In one embodiment, the result of energy level detection is merely displayed by the dashboard 52.

In step S211, the processor module 511 of the instrument cluster device 5 determines, based on the energy level signal, whether the energy level of the energy resource in the energy storage is raised. When it is determined by the processor module 511 that the energy level of the energy resource in the energy storage is not raised, a flow of procedure goes back to step S210. Otherwise, when it is determined by the processor module 511 that the energy level of the energy resource in the energy storage is raised, the flow of procedure proceeds to step S212.

In step S212, the host display 50 of the instrument cluster device 5 is controlled by the processor module 511 to display the barcode (e.g., the QR code as shown in Figure 4).

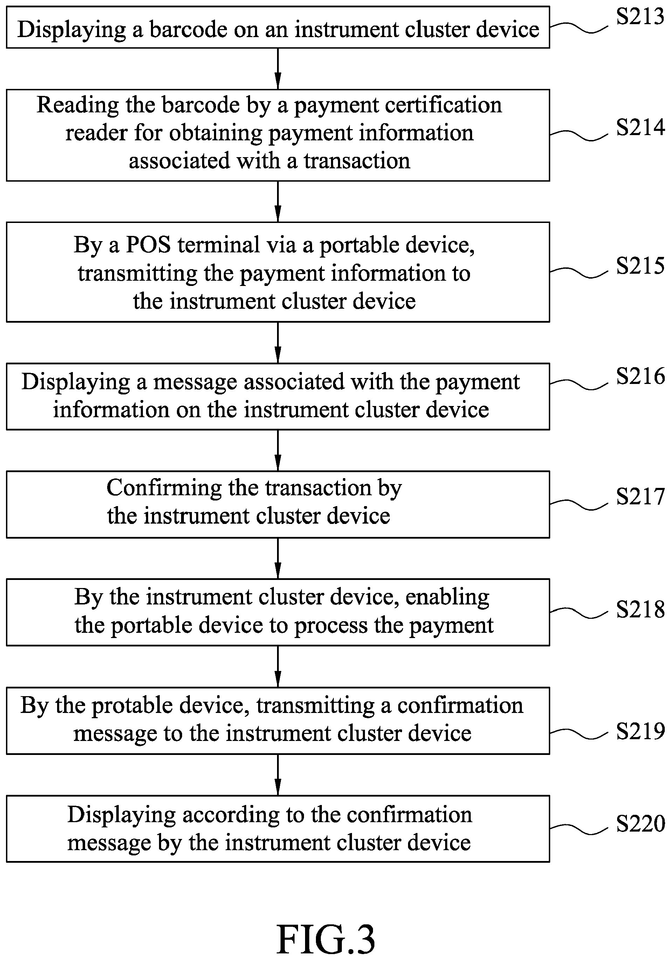

Thereafter, the flow of procedure of the second embodiment of the method for payment according to the disclosure continues to go through steps S214 to S220, which are respectively similar to steps S214 to S220 of the first embodiment as shown in Figure 3, and details of implementations of which are thus omitted herein for the sake of brevity.

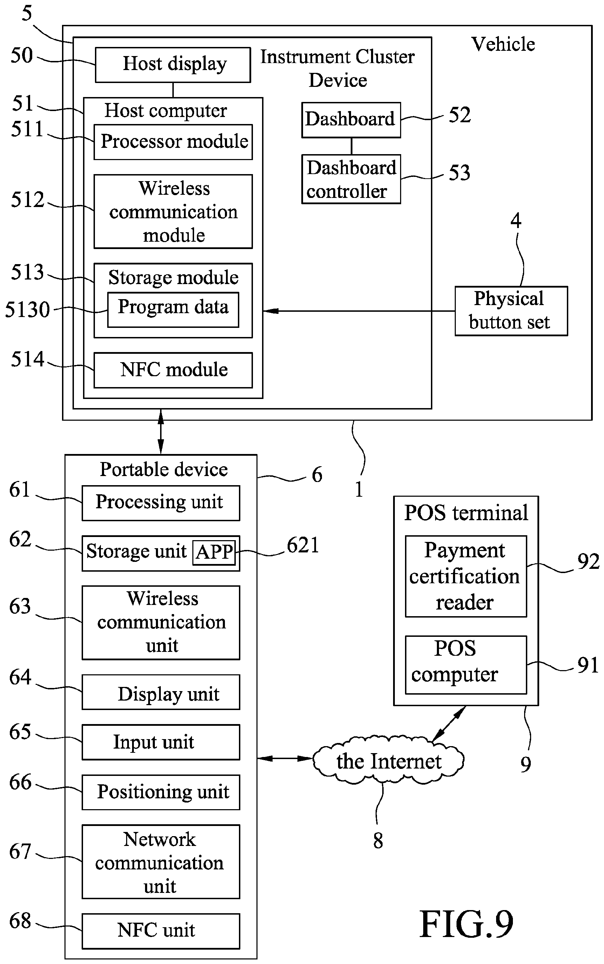

Referring to Figure 9, a third embodiment of the system for payment according to the disclosure is illustrated. The third embodiment of the system for payment is similar to the first embodiment of the system for payment previously described, but is different in aspects described as follows.

In the third embodiment, the instrument cluster device 5 further includes a near-field communication (NFC) module 514 that is disposed beneath the host display 50 and that is configured to provide the payment certification to be read by the payment certification reader 92 of the POS terminal 9 by means of NFC techniques . In this embodiment, the payment certification reader 92 of the POS terminal 9 is implemented to be an NFC sensor. The processor module 511 is electrically connected to the NFC module 514, and is configured to activate the NFC module 514 so as to enable the payment certification reader 92 of the POS terminal 9 to read the payment certification by means of NFC techniques. In addition, in this embodiment, the portable device 6 further includes an NFC unit 68 which enables the portable device 6 to provide the payment certification to the payment certification reader 92 of the POS terminal 9 by means of NFC techniques as well.

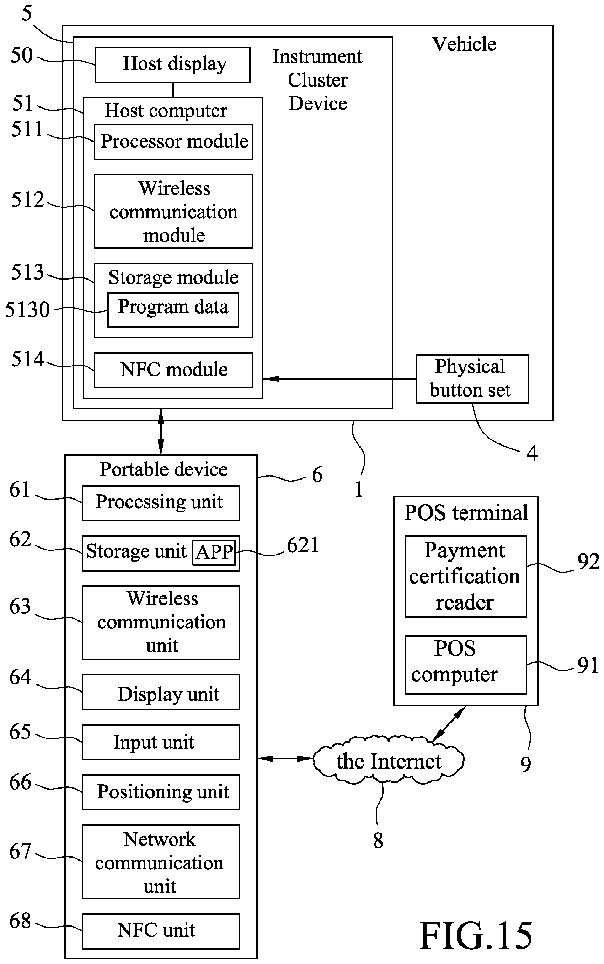

Figure 15 illustrates a variant of the third embodiment of the system for payment according to the disclosure. In this embodiment, the instrument cluster device 5 includes only the host display 50 and the host computer 51 and does not include the dashboard 52 and the dashboard controller 53 that are shown in Figure 9. All functions of the dashboard 52 and the dashboard controller 53 are realized by the host display 50 and the host computer 51, respectively.

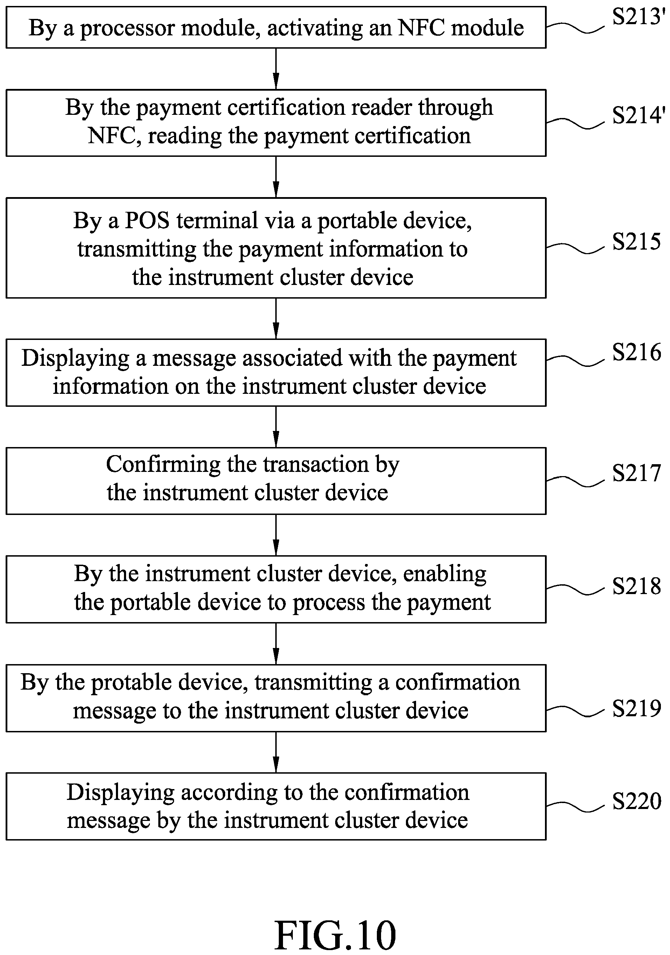

Referring to Figure 10, a third embodiment of the method for payment is illustrated. The method is adapted to be implemented by the instrument cluster device 5 of the vehicle 1, the portable device 6 and the POS terminal 9 that are described in the third embodiment of the system for payment, depicted exemplarily in Figure 9 or 15. The third embodiment of the method for payment includes steps described as follows.

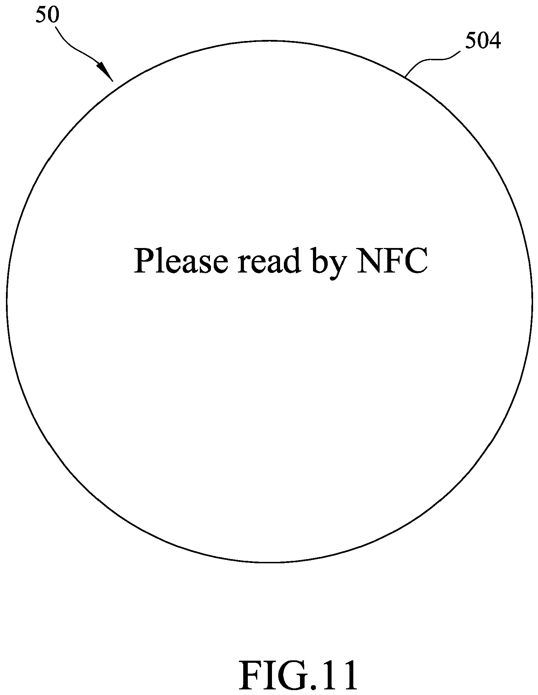

In step S213', in response to a user operation on the physical button set 4 which is performed after the vehicle 1 has been filled with a desired amount of the energy resource (e.g., the energy storage is filled up), the processor module 511 activates the NFC module 514 so as to enable the payment certification reader 92 of the POS terminal 9 to read the payment certification by means of NFC techniques. Then, the host display 50 of the instrument cluster device 5 displays a prompt message 504 which requests reading of the payment certification by means of NFC techniques as shown in Figure 11.

In step S214', the payment certification reader 92 of the POS terminal 9 is operated to read the payment certification provided by the instrument cluster device 5 by means of NFC techniques via the NFC module 514.

Subsequently, the flow of procedure of the third embodiment of the method for payment according to the disclosure continues to go through steps S215 to S220 so as to complete the transaction. Since steps S215 to S220 of the third embodiment are respectively similar to steps S215 to S220 of the first embodiment as shown in Figure 3, details of implementations of steps S215 to S220 are omitted herein for the sake of brevity.

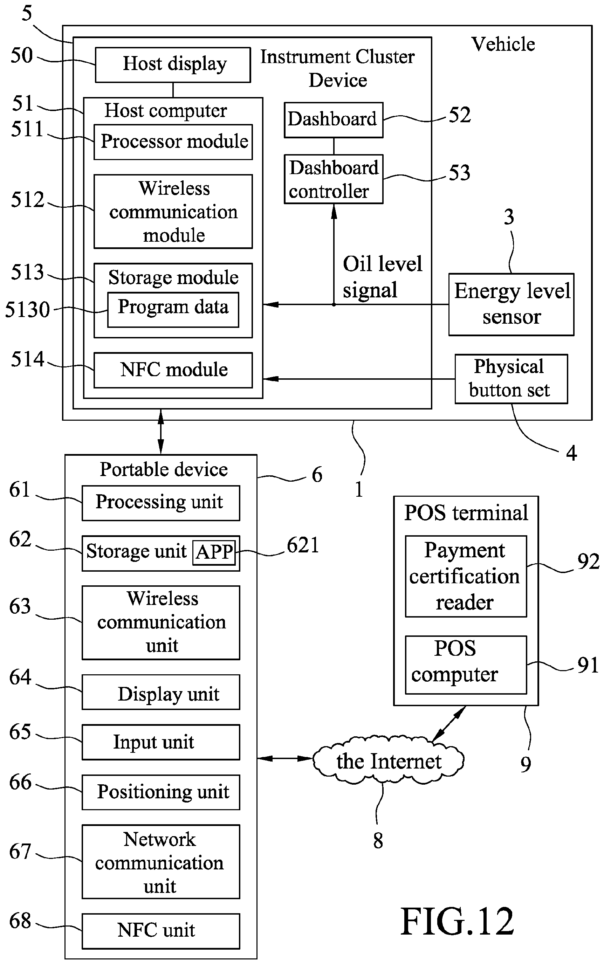

Referring to Figure 12, a fourth embodiment of the system for payment according to the disclosure is illustrated. The fourth embodiment of the system for payment is similar to the third embodiment of the system for payment previously described, but is different in aspects described as follows.

In this embodiment, the system for payment further includes the energy level sensor 3 that is disposed in the energy storage, and that is electrically connected to the instrument cluster device 5. The energy level sensor 3 is configured to detect the energy level of energy resource in the energy storage so as to generate the energy level signal, and to transmit the energy level signal to the processor module 511 of the host computer 51 and the dashboard controller 53.

The processor module 511, which is electrically connected to the NFC module 514 and the energy level sensor 3, is configured to receive the energy level signal . The processor module 511 and the dashboard controller 53 of the instrument cluster device 5 respectively control the host display 50 and the dashboard 52 to display the result of energy level detection based on the energy level signal. In one embodiment, the result of energy level detection is merely displayed by the dashboard 52.

The processor module 511 is further to determine whether the energy level of the energy resource in the energy storage is raised based on the energy level signal. The processor module 511 is configured to activate, when it is determined by the processor module 511 that the energy level of the energy resource in the energy storage is raised, the NFC module 514 so as to enable the payment certification reader 92 of the POS terminal 9 to read the payment certification by means of NFC techniques. At the same time, the processor module 511 controls the host display 50 to display the prompt message 504 which requests a reading of the payment certification by means of NFC techniques as shown in Figure 11. That is to say, when it is determined that the energy storage of the vehicle 1 is being filled with energy resource, which causes the energy level of energy resource to rise, the instrument cluster device 5 is implemented to automatically display the prompt message 504.

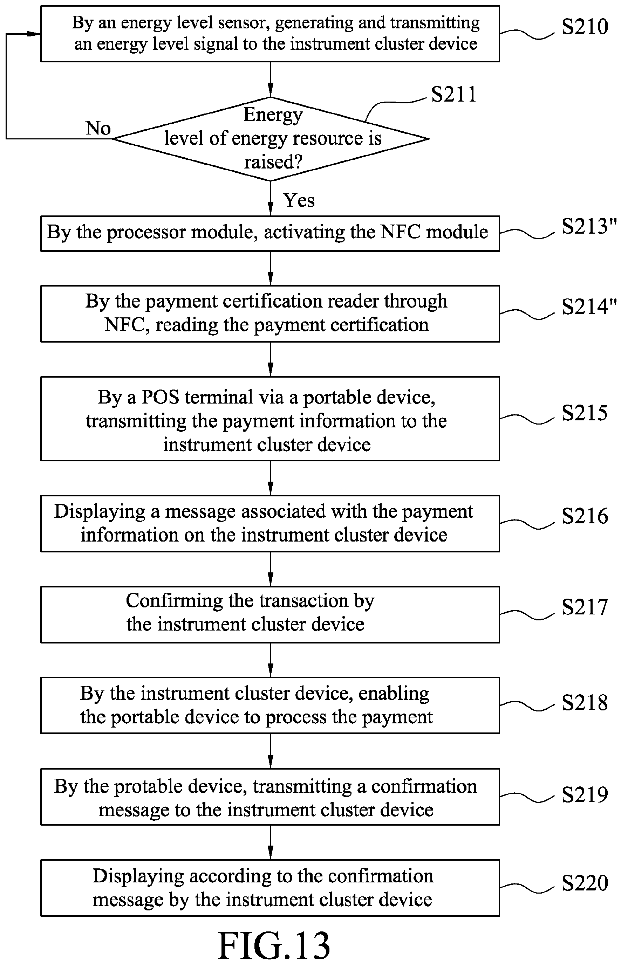

Referring to Figure 13, a fourth embodiment of the method for payment is illustrated. The method is adapted to be implemented by the instrument cluster device 5 of the vehicle 1, the portable device 6 and the POS terminal 9 that are described in the fourth embodiment of the system for payment, as exemplarily depicted in Figure 12. The fourth embodiment of the method for payment includes steps described as follows.

In step S210, the energy level sensor 3 detects the energy level of energy resource in the energy storage so as to generate the energy level signal, and transmits the energy level signal to the host computer 51 and the dashboard controller 53 of the instrument cluster device 5, so that the host display 50 and the dashboard 52 display the result of energy level detection based on the energy level signal.

In step S211, the processor module 511 of the instrument cluster device 5 determines, based on the energy level signal, whether the energy level of the energy resource in the energy storage is raised. When it is determined by the processor module 511 that the energy level of the energy resource in the energy storage is not raised, a flow of procedure goes back to step S210. Otherwise, i.e., when it is determined by the processor module 511 that the energy level of the energy resource in the energy storage is raised, the flow of procedure proceeds to step S213".

In step S213", the processor module 511 activates the NFC module 514 so as to enable the payment certification reader 92 of the POS terminal 9 to read the payment certification by means of NFC techniques. At the same time, the processor module 511 controls the host display 50 of the instrument cluster device 5 to display the prompt message 504 requesting a reading of the payment certification by means of NFC techniques as shown in Figure 11.

In step S214", the payment certification reader 92 of the POS terminal 9 is operated to read the payment certification provided by the instrument cluster device 5 by means of NFC techniques via the NFC module 514.

In the following, the flow of procedure of the fourth embodiment of the method for payment according to the disclosure continues to go through steps S215 to S220 so as to complete the transaction. Since steps S215 to S220 of the fourth embodiment are respectively similar to steps S215 to S220 of the second embodiment as shown in Figure 8, details of implementations of steps S215 to S220 are omitted herein for the sake of brevity.

In summary, the method and the system for payment according to the disclosure utilize an instrument cluster device of a vehicle and a portable device to fulfill a transaction, facilitating a user to make a payment on/in the vehicle.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A method for payment by using an instrument cluster device (5) to fulfill a transaction, the method adapted to be implemented by the instrument cluster device (5) of a vehicle (1), a portable device (6) and a Point of Sale, POS, terminal (9), the instrument cluster device (5) communicable with the portable device (6), the portable device (6) communicable with the POS terminal (9) via the Internet (8), the POS terminal (9) including a POS computer (91) and a payment certification reader (92) that is electrically connected to the POS computer (91), the method **characterized by** steps of:
(a) by the payment certification reader (92) of the POS terminal (9), reading a payment certification that is associated with the portable device (6) from the instrument cluster device (5) of the vehicle (1), and transmitting the payment certification to the POS computer (91) of the POS terminal (9);
(b) by the POS computer (91) of the POS terminal (9) via the Internet (8), enabling the portable device (6) associated with the payment certification to transmit payment information regarding the transaction to the instrument cluster device (5) that communicates with the portable device (6);
(c) by the instrument cluster device (5), displaying the payment information;
(d) by the instrument cluster device (5) after the transaction has been confirmed by a user operation on the vehicle (1), enabling the portable device (6) to process the payment; and
(e) transmitting, by the portable device (6) to the instrument cluster device (5), a confirmation message indicating that the payment has been made.

2. The method for payment as claimed in claim 1, the instrument cluster device (5) including a host display (50), the method **characterized in that**:
step (a) includes reading, by the payment certification reader (92) of the POS terminal (9) through image scanning, a barcode that contains information of the payment certification and that is displayed on the host display (50) of the instrument cluster device (5); and
step (c) includes displaying the payment information by the host display (50) of the instrument cluster device (5) .

3. The method for payment as claimed in claim 2, the transaction being associated with purchase of energy resource, the vehicle (1) including an energy storage and an energy level sensor (3) that is electrically connected to the instrument cluster device (5), prior to step (a), the method further **characterized by** steps of:
(f) by the energy level sensor (3), detecting an energy level of energy resource in the energy storage so as to generate an energy level signal, and transmitting the energy level signal to the instrument cluster device (5);
(g) determining, by the instrument cluster device (5) based on the energy level signal, whether the energy level of the energy resource in the energy storage is raised; and
(h) by the host display (50) of the instrument cluster device (5) when it is determined by the instrument cluster device (5) that the energy level in the energy storage is raised, displaying the barcode.

4. The method for payment as claimed in claim 1, the instrument cluster device (5) including a near-field communication, NFC, module (514), the method **characterized in that**:
step (a) includes reading, by the payment certification reader (92) of the POS terminal (9), the payment certification provided by the instrument cluster device (5) by means of NFC techniques via the NFC module (514) .

5. The method for payment as claimed in claim 4, the transaction being associated with purchase of energy resource, the vehicle (1) including an energy storage and an energy level sensor (3), the instrument cluster device (5) including a processor module (511) that is electrically connected to the NFC module (514) and the energy level sensor (3), prior to step (a), the method further **characterized by** steps of:
(i) by the energy level sensor (3), detecting an energy level of energy resource in the energy storage so as to generate an energy level signal, and transmitting the energy level signal to the processor module (511) of the instrument cluster device (5);
(j) determining, by the processor module (511) of the instrument cluster device (5) based on the energy level signal, whether the energy level in the energy storage is raised; and
(k) by the processor module (511) of the instrument cluster device (5) when it is determined by the processor module (511) that the energy level in the energy storage is raised, activating the NFC module (514) so as to enable the payment certification reader (92) of the POS terminal (9) to read the payment certification by means of NFC techniques.

6. The method for payment as claimed in claim 1, **characterized in that** step (b) includes enabling, by the POS computer (91) of the POS terminal (9), the portable device (6) associated with the payment certification to transmit the payment information that includes information associated with a total charge involved in the transaction.

7. The method for payment as claimed in claim 6, the vehicle (1) further including a button that is electrically connected to the instrument cluster device (5), the method **characterized in that** step (d) includes, by the instrument cluster device (5) after the information associated with the total charge involved in the transaction has been confirmed by user operation on the button (4), enabling the portable device (6) to process the payment.

8. The method for payment as claimed in claim 1, **characterized in that** the portable device (6) and the instrument cluster device (5) communicate with each other through one of wired communication and wireless communication.

9. A system for payment by using an instrument cluster device (5) to fulfill a transaction, said system adapted to be used in combination with a vehicle (1) and a Point of Sale, POS, terminal (9), the POS terminal (9) including a POS computer (91) and a payment certification reader (92) that is electrically connected to the POS computer (91), said system **characterized by**:
an instrument cluster device (5) disposed on the vehicle (1), and configured to provide a payment certification that is to be read by the payment certification reader (92) of the POS terminal (9), so as to enable the payment certification reader (92) of the POS terminal (9) to transmit the payment certification to the POS computer (91) of the POS terminal (9) for further transmission of payment information regarding the transaction by the POS computer (91) of the POS terminal (9) via the Internet (8); and
a portable device (6) that is communicable with said instrument cluster device (5), that is associated with the payment certification, and that is configured to receive the payment information transmitted by the POS computer (91) of the POS terminal (9), and to transmit the payment information to said instrument cluster device (5),
wherein said instrument cluster device (5) is further configured to display the payment information, and to, after the transaction has been confirmed by a user operation on said instrument cluster device (5), enable said portable device (6) to process the payment.

10. The system for payment as claimed in claim 9, **characterized in that** said instrument cluster device (5) includes a host display (50) that is configured to display a barcode which contains information of the payment certification and which is to be read by the payment certification reader (92) of the POS terminal (9) through image scanning, and that is configured to display the payment information.

11. The system for payment as claimed in claim 10, the transaction being associated with purchase of energy resource, the vehicle (1) including an energy storage, said system further **characterized by**:
an energy level sensor (3) that is disposed on the vehicle (1), that is electrically connected to said instrument cluster device (5), and that is configured to detect an energy level of energy resource in the energy storage so as to generate an energy level signal, and to transmit the energy level signal to said instrument cluster device (5), and
wherein said instrument cluster device (5) is further configured to determine whether the energy level of the energy resource in the energy storage is raised based on the energy level signal, and to display, when it is determined by said instrument cluster device (5) that the energy level of the energy resource in the energy storage is raised, the barcode on said host display (50) of said instrument cluster device (5).

12. The system for payment as claimed in claim 9, **characterized in that** said instrument cluster device (5) includes a near-field communication, NFC, module (514) that is configured to provide the payment certification to be read by the payment certification reader (92) of the POS terminal (9) by means of NFC techniques.

13. The system for payment as claimed in claim 12, the transaction being associated with purchase of energy resource, the vehicle (1) including an energy storage, said system further **characterized by**:
an energy level sensor (3) that is disposed on the vehicle (1), and that is configured to detect an energy level of energy resource in the energy storage so as to generate an energy level signal, and to transmit the energy level signal, and
wherein said instrument cluster device (5) includes a processor module (511) that is electrically connected to said NFC module (514) and said energy level sensor (3), and that is configured to receive the energy level signal, to determine whether the energy level of the energy resource in the energy storage is raised based on the energy level signal, and to, when it is determined by said processor module (511) of said instrument cluster device (5) that the energy level of the energy resource in the energy storage is raised, activate said NFC module (514) so as to enable the payment certification reader (92) of the POS terminal (9) to read the payment certification by means of NFC techniques.

14. The system for payment as claimed in claim 9, **characterized in that** the payment information includes information associated with a total charge involved in the transaction.

15. The system for payment as claimed in claim 14, further **characterized by** a button that is disposed on the vehicle (1), that is electrically connected to said processor module (511) of said instrument cluster device (5), and that is configured to be operated for confirmation of the information associated with the total charge involved in the transaction.

16. The system for payment as claimed in claim 9, **characterized in that** said portable device (6) and said instrument cluster device (5) are configured to communicate with each other through one of wired communication and wireless communication.
